# EUROPEAN PATENT SPECIFICATION

(11) **EP 3 099 077 B1**
(45) Date of publication and mention of the grant of the patent: **15.07.2020**
(21) Application number: 15305818.5
(22) Date of filing: 29.05.2015
(51) Int. Cl.: H04N 13/111, H04N 13/172, H04N 21/258, H04N 21/442, H04N 21/45, H04N 21/431, H04N 21/81

(54) **METHOD FOR DISPLAYING A CONTENT FROM 4D LIGHT FIELD DATA**
VERFAHREN ZUR ANZEIGE EINES INHALTS AUS 4D-LICHTFELDDATEN
PROCÉDÉ PERMETTANT D'AFFICHER UN CONTENU À PARTIR DE DONNÉES 4D D'UN CHAMP LUMINEUX

(43) Date of publication of application: 30.11.2016
(73) Proprietor: InterDigital CE Patent Holdings, 75017 Paris (FR)
(72) Inventor: Blonde, Laurent, 35576 CESSON SEVIGNE (FR); Schubert, Arno, 35576 CESSON SEVIGNE (FR); Gendrot, Remi, 35576 CESSON SEVIGNE (FR)
(74) Representative: Huchet, Anne

(56) References cited:
- EP-A1- 2 852 149
- WO-A1-2014/094874
- GB-A- 2 452 519
- US-A1- 2009 319 523
- US-A1- 2011 239 253
- US-A1- 2011 267 531
- US-A1- 2012 249 550
- US-A1- 2014 098 191
- US-A1- 2014 240 578

## Description

### Technical Field

The disclosure relates to 4D light field data processing. More precisely, the disclosure relates to a technique for displaying a content (either a 2D image derived/extracted from 4D light field data, or a set of images derived/extracted from 4D light field data (as for example in the case of stereoscopic or multi-views display devices, or also the 4D light field data itself via a light field display device).

### Background

This section is intended to introduce the reader to various aspects of art, which may be related to various aspects of the present invention that are described and/or claimed below. This discussion is believed to be helpful in providing the reader with background information to facilitate a better understanding of the various aspects of the present invention. Accordingly, it should be understood that these statements are to be read in this light, and not as admissions of prior art.

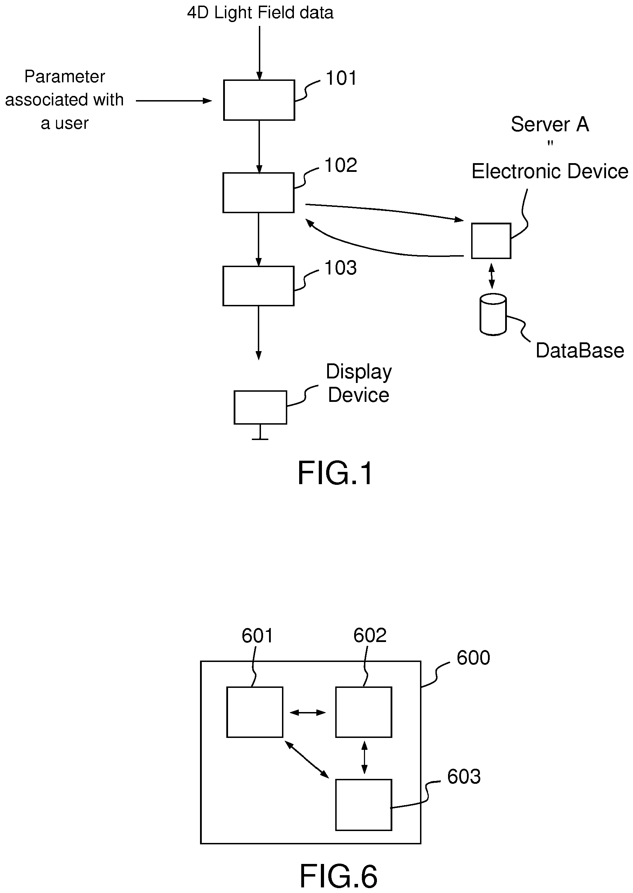

The acquisition and rendering of 4D light-field data, which can be viewed as a sampling of a 4D light field (i.e. the recording of light rays as explained in Figure 1 of the article:" Understanding camera trade-offs through a Bayesian analysis of light field projections" by Anat Levin et al., published in the conference proceedings of ECCV 2008) is an hectic research subject.

Indeed, compared to classical 2D images obtained from a camera, 4D light-field data enable a user to have access to more post processing features that enhance the rendering of images and/or the interactivity with the user. For example, with 4D light-field data, it is possible to perform with ease refocusing of images a posteriori (i.e. refocusing with freely selected distances of focalization meaning that the position of a focal plane can be specified/selected a posteriori), as well as changing slightly the point of view in the scene of an image. The acquisition of 4D light-field data can be done by different techniques (for example via the use of plenoptic camera, as depicted in document WO 2013/180192 or in document GB 2488905**,** or via the use a camera array as depicted in document WO 2014/149403).

In the state of the art, there are several ways to represent (or define) 4D light-field data. Indeed, in the Chapter 3.3 of the Phd dissertation thesis entitled "Digital Light Field Photography" by Ren Ng, published in July 2006, three different ways to represent 4D light-field data are described. Firstly, 4D light-field data can be represented, when recorded by a plenoptic camera by a collection of micro-lens images (also named microimages in the state of the art). 4D light-field data in this representation are named raw images (or raw 4D light-field data). Secondly, 4D light-field data can be represented, by a set of sub-aperture images. A sub-aperture image corresponds to a captured image of a scene from a point of view, the point of view being slightly different between two sub-aperture images. These sub-aperture images give information about the parallax and depth of the imaged scene. Thirdly, 4D light-field data can be represented by a set of epipolar images (see for example the article entitled : *"*Generating EPI Representation of a 4D Light Fields with a Single Lens Focused Plenoptic Camera", by S. Wanner et al., published in the conference proceedings of ISVC 2011).

Usually, 4D light-field data can be used for displaying at least one 2D image in which refocusing a posteriori can be done (i.e. the display device is a conventional display device). But, it is also possible to display these 4D light-field data via a light field display device as the one depicted in document US 8933862**,** or in the document US 8416289**.** In a variant, the light field display device can be the one depicted in the article entitled *"*A Compressive Light Field Projection System" by M. Hirsch, G. Wetzstein, R. Raska, published in the conference proceedings of SIGGRAPH 2014.

When the 4D light-field data corresponds to a movie or a TV show (or whatever video sequence), usually the movie director selects which actor (or object) will be in focus in a group scene. Indeed, the movie director uses the focus in a scene as an artistic tool. However, due to the offered possibilities of light field processing techniques (such as the refocusing technique), users can decide to personalize the way they enjoy a displayed content by choosing the focal plane to be used.

Therefore, there is a need to have a technique that provides an automatic way to select a content to be displayed from 4D light field data, and that satisfies the user expectations (i.e. a suitable displayed content should be provided to the user).

EP 2 852 149 A1 discloses a method for generation and transmission of 3D video information to a user. The 3D video information is captured with a plenoptic camera, thereby generating 3D light field video information. The 3D light field video information is transmitted to said user. User focus view information of said user watching frames of the 3D light field video information is detected. Further frames of the 3D light field video information are then adapted in accordance with the user focus view information to generate a user-specific 3D video for further display to said user.

GB 2 452 519 A discloses a method of providing recommendations of viewable content from a plurality of viewable content to a user substantially in real time. Viewing data is generated from viewing of said viewable content by one or more other users substantially in real time. Said viewing data comprises data such as program details, viewers ratings and opinions and user data associated with each of said other users, said user data comprising at least an identity of said other users. Said viewing data is used to provide a recommendation of viewable content to said user substantially in real time.

### Summary of the disclosure

References in the specification to "one embodiment", "an embodiment", "an example embodiment", indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is assumed that it is within the knowledge of one skilled in the art to affect such feature, structure, or characteristic in connection with other embodiments whether or not explicitly described.

The present disclosure is directed to a method for displaying a content from 4D light field data. The method is executed by an electronic device, and is remarkable in that it comprises:
- obtaining at least one parameter associated with a user;
- obtaining said 4D light field data or an identifying element of said 4D light field data;
- obtaining light field viewing parameters for said 4D light field data based on said at least one parameter associated with said user, said light field viewing parameters being derived using statistics representative of measured interactions with said 4D light field data by other users; and
- deriving said content to be displayed from said 4D light field data using said light field viewing parameters.

The present technique provides an automatic way to select a content to be displayed from 4D light field data that has a great probability to be suitable to a user (i.e. a user is expected not to change the way the content is displayed in term of focus plane, depth of field, viewpoints, etc.).

In a preferred embodiment, the method is remarkable in that said light field viewing parameters comprise viewpoint parameters and/or refocusing parameters and/or field of view parameters and/or visual effect parameters and/or depth of field parameters.

In a preferred embodiment, the method is remarkable in that said measured interactions relate to change of point of view and/or refocusing and/or change of field of view and/or application of visual effect and/or change of depth of field.

In a preferred embodiment, the method is remarkable in that said visual effect relates to color variation in background and/or in foreground of said content, and/or relates to depth keying, and/or relates to pixelization, and/or relates to miniature effects and/or relates to tilt shift.

In a preferred embodiment, the method is remarkable in that said at least one parameter associated with a user belongs to a list comprising:
- an age of a user;
- nationality information;
- place of dwelling;
- place of birth;
- hobbies;
- gender;
- occupation category;
- education;
- preference for a given artistic intent in blur management;
- preferred level of blur;
- preference for blurred backgrounds;
- preference for blurred foregrounds;
- preference for all in focus;
- preference for close-ups;
- preference for large field of view.

In a preferred embodiment, the method is remarkable in that, when several parameters associated with said user are used for obtaining said light field viewing parameters, each parameter is associated with a weight in order to determine said light field viewing parameters.

In a preferred embodiment, the method is remarkable in that said content derived from said 4D light field data is 4D light field data.

In a preferred embodiment, the method is remarkable in that said content derived from said 4D light field data is represented by a set of focal stacks with dynamic steps, said dynamic steps being defined according to said at least one parameter.

In a preferred embodiment, the method is remarkable in that said content derived from said 4D light field data is a 2D image or 2D video.

In a preferred embodiment, the method is remarkable in that said content derived from said 4D light field data is a 3D content.

According to an exemplary implementation, the different steps of the method are implemented by a computer software program or programs, this software program comprising software instructions designed to be executed by a data processor of a relay module according to the disclosure and being designed to control the execution of the different steps of this method.

Consequently, an aspect of the disclosure also concerns a program liable to be executed by a computer or by a data processor, this program comprising instructions to command the execution of the steps of a method as mentioned here above.

This program can use any programming language whatsoever and be in the form of a source code, object code or code that is intermediate between source code and object code, such as in a partially compiled form or in any other desirable form.

The disclosure also concerns an information medium readable by a data processor and comprising instructions of a program as mentioned here above.

The information medium can be any entity or device capable of storing the program. For example, the medium can comprise a storage means such as a ROM (which stands for *"Read Only Memory"*), for example a CD-ROM (which stands for *"Compact Disc* - *Read Only Memory"*) or a microelectronic circuit ROM or again a magnetic recording means, for example a floppy disk or a hard disk drive.

Furthermore, the information medium may be a transmissible carrier such as an electrical or optical signal that can be conveyed through an electrical or optical cable, by radio or by other means. The program can be especially downloaded into an Internet-type network.

Alternately, the information medium can be an integrated circuit into which the program is incorporated, the circuit being adapted to executing or being used in the execution of the method in question.

According to one embodiment, an embodiment of the disclosure is implemented by means of software and/or hardware components. From this viewpoint, the term "module" can correspond in this document both to a software component and to a hardware component or to a set of hardware and software components.

A software component corresponds to one or more computer programs, one or more sub-programs of a program, or more generally to any element of a program or a software program capable of implementing a function or a set of functions according to what is described here below for the module concerned. One such software component is executed by a data processor of a physical entity (terminal, server, etc.) and is capable of accessing the hardware resources of this physical entity (memories, recording media, communications buses, input/output electronic boards, user interfaces, etc.).

Similarly, a hardware component corresponds to any element of a hardware unit capable of implementing a function or a set of functions according to what is described here below for the module concerned. It may be a programmable hardware component or a component with an integrated circuit for the execution of software, for example an integrated circuit, a smart card, a memory card, an electronic board for executing firmware etc. In a variant, the hardware component comprises a processor that is an integrated circuit such as a central processing unit, and/or a microprocessor, and/or an Application-specific integrated circuit (ASIC), and/or an Application-specific instruction-set processor (ASIP), and/or a graphics processing unit (GPU), and/or a physics processing unit (PPU), and/or a digital signal processor (DSP), and/or an image processor, and/or a coprocessor, and/or a floating-point unit, and/or a network processor, and/or an audio processor, and/or a multi-core processor. Moreover, the hardware component can also comprise a baseband processor (comprising for example memory units, and a firmware) and/or radio electronic circuits (that can comprise antennas) which receive or transmit radio signals. In one embodiment, the hardware component is compliant with one or more standards such as ISO/IEC 18092/ECMA-340, ISO/IEC 21481/ECMA-352, GSMA, StoLPaN, ETSI/SCP (Smart Card Platform), GlobalPlatform (i.e. a secure element). In a variant, the hardware component is a Radio-frequency identification (RFID) tag. In one embodiment, a hardware component comprises circuits that enable Bluetooth communications, and/or Wi-fi communications, and/or Zigbee communications, and/or USB communications and/or Firewire communications and/or NFC (for Near Field) communications.

It should also be noted that a step of obtaining an element/value in the present document can be viewed either as a step of reading such element/value in a memory unit of an electronic device or a step of receiving such element/value from another electronic device via communication means.

In a variant, it is proposed an electronic device for displaying a content from 4D light field data. Such electronic device is remarkable in that it comprises a module configured to:
- obtain at least one parameter associated with a user;
- obtain said 4D light field data or an identifying element of said 4D light field data;
- obtain light field viewing parameters for said 4D light field data based on said at least one parameter associated with said user, said light field viewing parameters being derived using statistics representative of measured interactions with said 4D light field data by other users; and
- derive said content to be displayed from said 4D light field data using said light field viewing parameters.

In another embodiment, such electronic device is remarkable in that it handles said light field viewing parameters that comprise viewpoint parameters and/or refocusing parameters and/or field of view parameters and/or visual effect parameters and/or depth of field parameters.

In another embodiment, such electronic device is remarkable in that it handles said measured interactions that relate to change of point of view and/or refocusing and/or change of field of view and/or application of visual effect and/or change of depth of field.

### Brief description of the drawings

The above and other aspects of the invention will become more apparent by the following detailed description of exemplary embodiments thereof with reference to the attached drawings in which:
- Figure 1 presents a flowchart that comprises some steps of a method for displaying according to one embodiment of the disclosure;
- Figure 2 an example of a file stored on an electronic device that is used in the method described in Figure 1;
- Figure 3 presents a schematic view of a system that obtains (or collects) information related to the interactions of users with 4D light field data, and generates Light Field viewing parameters stored in a file as for example the one depicted in Figure 2;
- Figure 4 depicts a focal stack as known in the state of the art;
- Figure 5 illustrates a focal stack, which has been determined with an irregular sampling grid adapted to the scene, according to one embodiment of the disclosure;
- Figure 6 presents an example of an electronic device that is used to perform one or several steps of methods disclosed in the present document.

### Detailed description

Figure 1 presents a flowchart that comprises some steps of a method for displaying according to one embodiment of the disclosure.

In a step referenced 101, an electronic device (for example as the one depicted in Figure 6 of the present document) obtains 4D light-field data. In one embodiment, the 4D light-field data corresponds to a 4D light-field movie that can be viewed as a set of4D light-field data that change during a time interval. The electronic device obtains also at least one parameter associated with said user. Such parameter can be viewed as a feature or a category or an attribute related to the user. For example, such parameter can be a preferred level of blur or a preferred blur grading intent. In another variant, it can be a personal attribute (such as for instance an age, a marital status, etc.).

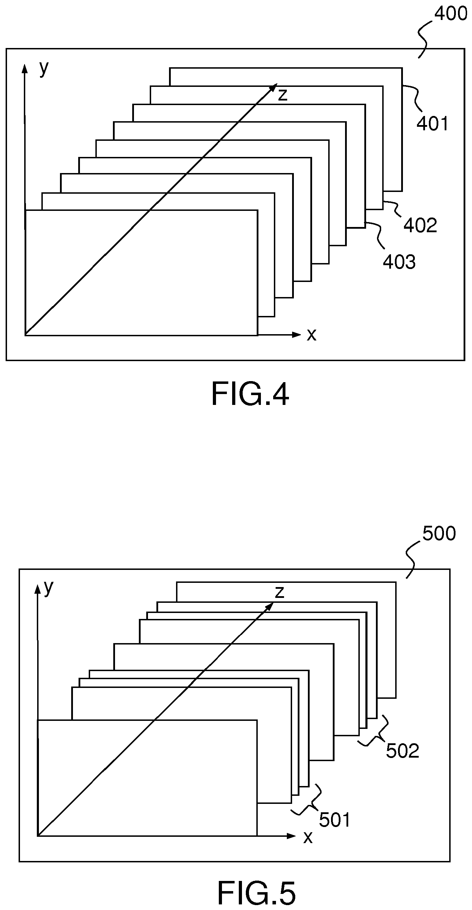

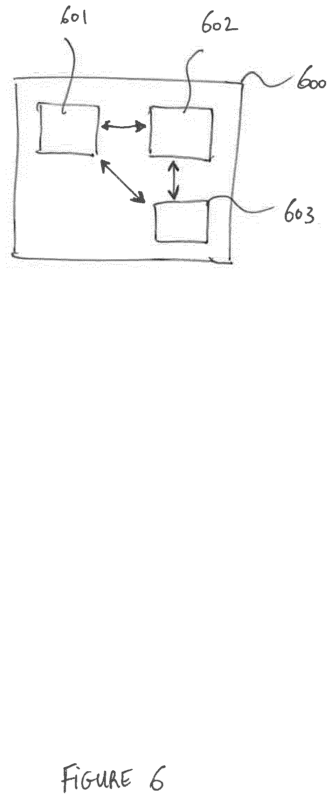

Then, in a step referenced 102, the electronic device contacts another electronic device (for example, a server referenced server A). For example, in one embodiment of the disclosure, a request is sent (via a packet as in IP protocol). Such request comprises an identifying element of 4D Light Field data, as well as said at least one parameter. Then, for example, the server A obtains from a query to a database, Light Field viewing parameters (for example viewpoint parameters and/or refocusing parameters and/or field of view parameters and/or visual effect parameters, and/or depth of field parameters). In the case of a movie, the Light Field viewing parameters takes into account the time at which they have to be applied). Then, these Light Field viewing parameters are transmitted to the electronic device for performing a step referenced 103. In the step 103, the electronic device based on the Light Field viewing parameters delivers a content to be displayed. In one embodiment, the content to be displayed is a 2D content extracted from said 4D Light Field data. In a variant, the content to be displayed is a 3D content extracted from said 4D Light Field data. In another variant, the content to be displayed is 4D Light Field data represented by a focal stack as the one depicted in Figure 5.

In a variant, at step 101, the electronic device receives only an identifying element of 4D Light Field data, and not 4D Light Field data itself. Then in such embodiment, the server A delivers to the electronic device the content to be displayed that is configured to be displayed.

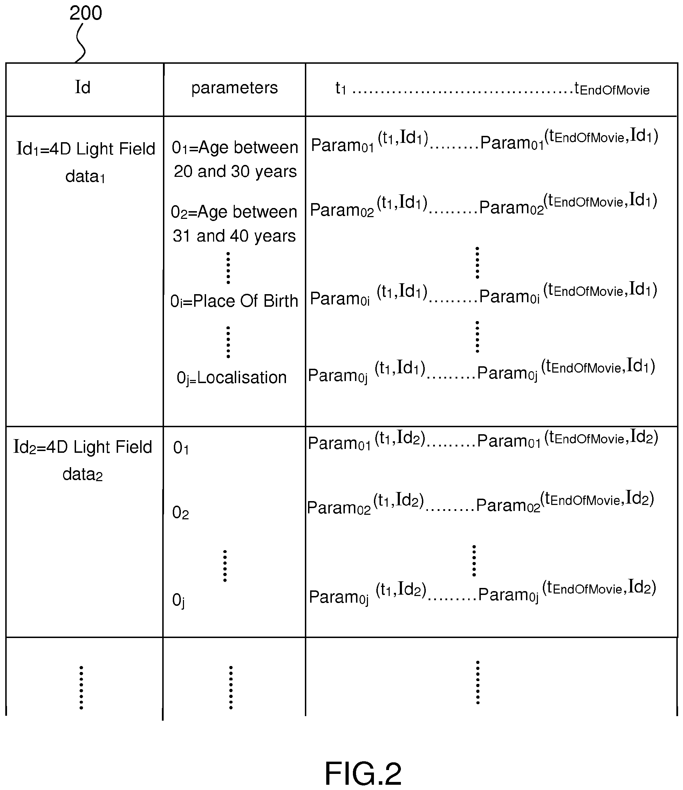

Figure 2 is an example of a file stored on an electronic device (in the database accessed by the server A) that is used in the method described in Figure 1.

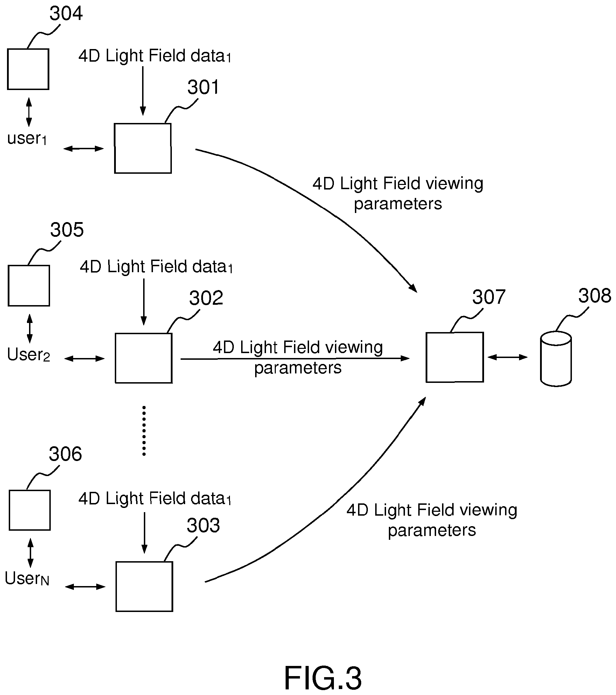

The file referenced 200, comprises identifying elements (noted ID₁, ID₂,...), where each identifying element is associated with one 4D Light Field data. For each identifying element, a list of parameters/features/attributes (noted O₁, O₂, etc.) is defined. Then, in the case that 4D Light Field data is a movie, a discretization (in time) is defined from t₁ to t_{EndofMovie}. For each time, and for each feature associated with an identifying element, Light Field viewing parameters are defined. These Light Field viewing parameters (the elements *param_{Oᵢ}*^{(*tₖ,IDⱼ*)}) can be obtained from the gathering and processing of statistics as mentioned in Figure 3.

In the step 102, when the electronic device transmits said at least one parameter (for example the parameter O₁), for a given time, then the server A obtains from the file 200 corresponding Light Field viewing parameters.

It should be noted that, in step 102, that several parameters can be transmitted to the server A (for example the parameters O₁ and Oⱼ), and that these parameters lead to different Light Field viewing parameters (or are potentially incompatible Light Field viewing parameters). In that case, a weighting function can be used to select which Light Field viewing parameters have to be used for obtaining the content to be displayed. For example, if two different users of the same age have completely different Light Field viewing parameters for the same 4D Light Field data, then another parameter from the list of parameters/features/attributes associated with the user should be used in order to select Light Field viewing parameters that should be suit to the user.

In a variant, the parameters for two different 4D Light field data can be different.

Figure 3 presents a schematic view of a system that obtains (or collects) information related to the interactions of users with 4D light field data, and generates Light Field viewing parameters.

Such system comprises a server (that is an electronic device) referenced 307 that collects/obtains Light Field viewing parameters chosen by a user when he views it, and it stores them on a database referenced 308.

More precisely, when creating or updating a file as the one presented in Figure 2, a panel of users is selected (user₁,..., user_{N}). Each user is associated with a list of features (for example the lists referenced 304,305, 306) that characterizes a user. Then, when these users watch/view a content related to the same 4D Light Field data, the electronic devices referenced 301 to 303 transmit the Light Field viewing parameters chosen by their users (i.e. the Light Field viewing parameters resulting from the measured/detected interactions. The terms measured/detected signify that a sensor detects/measures the interactions of the user for example with a touch screen, when he selects an element in a scene to be in focus). In one embodiment of the disclosure, the Light Field viewing parameters can be linked to the values of one or more features described in the following link: http://lightfield-forum.com/lightfield-features/, such as features related to the refocusing choices, and/or the choice of the all-in-focus option, and/or the change of the depth of field (as it can be variable), and/or the perspective shift/parallax selection, and/or the change of lighting, etc.In the case of the watching of a movie, a time discretization is used for reporting to the server 307 the values of the Light Field viewing parameters.

In the case that two different users (user₁ and user₂ for example) share a same feature in their lists (the lists 304 and 305 for example), but have different other features, a weighting function can be used to determine Light Field viewing parameters in Figure 2. For example the first user may be completely privileged, with weights set to their maximum in his/her favor when determining Light Field viewing parameters. A more balanced option may be computed so that the feature of each user has an influence on the Light Field viewing parameters. The weighting may be static or varying over time to satisfy better the users in average. It is however not the purpose of the present text to describe the many options such weighting function could implement.

Figure 4 depicts a focal stack as known in the state of the art.

Indeed, Figure 4 depicts a focal stack, referenced 400, which is a collection of *N* images *Rₙ* (with *n* ∈ [1,*N*]) focused at different planes, which define a cube of images (401, 402, 403...), where *N* is a user selected number of images. Hence, the distance or distance interval (on the z axis) between two consecutive images in the focal stack 400 corresponds to the distance between two focal planes linked to these two consecutive images. This value is constant, therefore the focal stack is obtained by the use of a regular sampling grid.

Figure 5 illustrates a focal stack, which has been determined with an irregular sampling grid adapted to the scene, according to one embodiment of the disclosure.

Indeed, based on the collected statistics (for example statistics on objects in a scene that are selected to be in focus), an electronic device is able to determine which elements in a scene associated with 4D light field data, that can be considered as elements of interest for a user based on some parameters associated with said user. Therefore, instead of delivering the 4D light field data itself to a display device (that is going to render content based on the 4D light field data), the electronic device provides a focal stack which as an irregular sampling grid. The sampling is based on elements of interest. Indeed, more details related to the elements of interest are comprised in such focal stack, than in a classical focal stack as depicted in Figure 4.

Hence, a generated focal stack, referenced 500 by this way, comprises smaller space interval (for the group of images referenced 501 and 502) that are related to a point of interest or point of visual attention in a scene (that could be linked to an object or a person in the scene for example) collected, for example, during the process described in Figure 3.

Figure 6 presents an example of an electronic device that is used to perform one or several steps of methods disclosed in the present document.

Such device referenced 600 comprises a computing unit (for example a CPU, for *"Central Processing Unit"*), referenced 601, and one or more memory units (for example a RAM (for *"Random Access Memory"*) block in which intermediate results can be stored temporarily during the execution of instructions a computer program, or a ROM block in which, among other things, computer programs are stored, or an EEPROM (*"Electrically-Erasable Programmable Read-Only Memory"*) block, or a flash block) referenced 602. Computer programs are made of instructions that can be executed by the computing unit. Such device 600 can also comprise a dedicated unit, referenced 603, constituting an input-output interface to allow the device 600 to communicate with other devices. In particular, this dedicated unit 603 can be connected with an antenna (in order to perform communication without contacts), or with serial ports (to carry communications "contact"). It should be noted that the arrows in Figure 6 signify that the linked unit can exchange data through buses for example together.

In an alternative embodiment, some or all of the steps of the method previously described, can be implemented in hardware in a programmable FPGA (*"Field Programmable Gate Array"*) component or ASIC (*"Application-Specific Integrated Circuit"*) component.

In an alternative embodiment, some or all of the steps of the method previously described, can be executed on an electronic device comprising memory units and processing units as the one disclosed in the Figure 6.

In one embodiment of the disclosure, the electronic device depicted in Figure 6 can be comprised in a light field display device or in a light field acquisition device that are configured to display and/or capture images (i.e. a sampling of a light field). These images are stored on one or more memory units. Hence, these images can be viewed as bit stream data (i.e. a sequence of bits). Obviously, a bit stream can also be converted on byte stream and vice versa.

In one embodiment of the disclosure, the electronic device depicted in Figure 6 can be comprised in a set-top box., or in a mobile phone, or in a gateway.

## Claims

1. A method for displaying a content derived from 4D light field data, the method being executed by an electronic device, the method comprising:
- obtaining at least one parameter associated with a user, said at least one parameter representing a feature or a category or an attribute related to said user;
- obtaining (101) said 4D light field data or an identifying element of said 4D light field data;
- transmitting a request to another electronic device, whereby said request comprises said at least one parameter and either said 4D light field data or said identifying element;
- obtaining (102) light field viewing parameters for said 4D light field data; and
- deriving (103) said content to be displayed from said 4D light field data using said light field viewing parameters;
wherein said light field viewing parameters are derived using statistics representative of measured interactions with said 4D light field data by other users.

2. The method according to claim 1, wherein said light field viewing parameters comprise viewpoint parameters and/or refocusing parameters and/or field of view parameters and/or visual effect parameters and/or depth of field parameters.

3. The method according to claim 1 or 2, wherein said measured interactions relate to change of point of view and/or refocusing and/or change of field of view and/or application of visual effect and/or change of depth of field.

4. The method according to claim 2 or 3, wherein said visual effect relates to color variation in background and/or in foreground of said content, and/or relates to depth keying, and/or relates to pixelization, and/or relates to miniature effects and/or relates to tilt shift.

5. The method according to any of claims 1 to 4, wherein said at least one parameter associated with a user belongs to a list comprising:
- an age of a user;
- nationality information;
- place of dwelling;
- place of birth;
- hobbies;
- gender;
- occupation category;
- education;
- preference for a given artistic intent in blur management;
- preferred level of blur;
- preference for blurred backgrounds;
- preference for blurred foregrounds;
- preference for all in focus;
- preference for close-ups;
- preference for large field of view.

6. The method according to any of claims 1 to 5, wherein when several parameters associated with said user are used for obtaining (102) said light field viewing parameters, each parameter is associated with a weight in order to determine said light field viewing parameters.

7. The method according to any of claims 1 to 6, wherein said content derived from said 4D light field data is 4D light field data.

8. The method according to claim 7, wherein said content derived from said 4D light field data is represented by a set of focal stacks with dynamic steps, said dynamic steps being defined according to said at least one parameter.

9. The method according to any of claims 1 to 6, wherein said content derived from said 4D light field data is a 2D image or 2D video.

10. The method according to any of claims 1 to 6, wherein said content derived from said 4D light field data is a 3D content.

11. A computer-readable and non-transient storage medium storing a computer program comprising a set of computer-executable instructions to implement a method for displaying when the instructions are executed by a computer, wherein the instructions comprise instructions, which when executed, configure the computer to perform the method of any of claims 1 to 10.

12. An electronic device for displaying a content from 4D light field data, the electronic device comprising a module configured to:
- obtain at least one parameter associated with a user, said at least one parameter representing a feature or a category or an attribute related to said user;
- obtain (101) said 4D light field data or an identifying element of said 4D light field data;
- transmit a request to another electronic device, whereby said request comprises said at least one parameter and either said 4D light field data or said identifying element;
- obtain (102) light field viewing parameters for said 4D light field data; and
- derive (103) said content to be displayed from said 4D light field data using said light field viewing parameters;
wherein said light field viewing parameters are derived using statistics representative of measured interactions with said 4D light field data by other users.

13. The electronic device according to claim 12, wherein said light field viewing parameters comprise viewpoint parameters and/or refocusing parameters and/or field of view parameters and/or visual effect parameters and/or depth of field parameters.

14. The electronic device for displaying according to claims 12 or 13, wherein said measured interactions relate to change of point of view and/or refocusing and/or change of field of view and/or application of visual effect and/or change of depth of field.

## Patentansprüche

1. Verfahren zum Anzeigen eines Inhalts, der von 4D-Lichtfelddaten abgeleitet ist, wobei das Verfahren durch eine elektronische Vorrichtung ausgeführt wird, wobei das Verfahren umfasst:
- Erhalten mindestens eines Parameters, der einem Benutzer zugeordnet ist, wobei der mindestens eine Parameter ein Merkmal oder eine Kategorie oder ein Attribut, das bzw. die sich auf den Benutzer bezieht, repräsentiert;
- Erhalten (101) der 4D-Lichtfelddaten oder eines identifizierenden Elements der 4D-Lichtfelddaten;
- Senden einer Anforderung an eine andere elektronische Vorrichtung, wobei die Anforderung den mindestens einen Parameter und entweder die 4D-Lichtfelddaten oder das identifizierende Element umfasst;
- Erhalten (102) von Lichtfeldbetrachtungsparametern für die 4D-Lichtfelddaten; und
- Ableiten (103) des anzuzeigenden Inhalts von den 4D-Lichtfelddaten unter Verwendung der Lichtfeldbetrachtungsparameter;
wobei die Lichtfeldbetrachtungsparameter unter Verwendung einer Statistik abgeleitet werden, die gemessene Interaktionen mit den 4D-Lichtfelddaten durch andere Benutzer repräsentiert.

2. Verfahren nach Anspruch 1, wobei die Lichtfeldbetrachtungsparameter Blickpunktparameter und/oder Refokussierungsparameter und/oder Blickfeldparameter und/oder Parameter visueller Effekte und/oder Feldtiefeparameter umfassen.

3. Verfahren nach Anspruch 1 oder 2, wobei sich die gemessenen Interaktionen auf die Änderung des Blickpunkts und/oder auf die Refokussierung und/oder auf die Änderung des Blickfelds und/oder auf die Anwendung eines visuellen Effekts und/oder auf die Änderung der Feldtiefe beziehen.

4. Verfahren nach Anspruch 2 oder 3, wobei sich der visuelle Effekt auf eine Farbänderung im Hintergrund und/oder im Vordergrund des Inhalts bezieht und/oder auf das Depth Keying bezieht und/oder auf die Pixelisierung bezieht und/oder auf Miniatureffekte bezieht und/oder auf die Neigungsverschiebung bezieht.

5. Verfahren nach einem der Ansprüche 1 bis 4, wobei der mindestens eine Parameter, der einem Benutzer zugeordnet ist, zu einer Liste gehört, die umfasst:
- ein Alter eines Benutzers;
- Nationalitätsinformationen;
- den Wohnort;
- den Geburtsort;
- Hobbys;
- das Geschlecht;
- die Beschäftigungskategorie;
- die Ausbildung;
- die Bevorzugung für eine gegebene künstlerische Absicht beim Unschärfemanagement;
- den bevorzugten Unschärfegrad;
- die Präferenz für unscharfe Hintergründe;
- die Präferenz für unscharfe Vordergründe;
- die Präferenz für All-in-Focus;
- die Präferenz für Nahaufnahmen;
- die Präferenz für ein großes Blickfeld.

6. Verfahren nach einem der Ansprüche 1 bis 5, wobei, wenn mehrere dem Benutzer zugeordnete Parameter verwendet werden, um die Lichtfeldbetrachtungsparameter zu erhalten (102), jedem Parameter eine Gewichtung zugeordnet wird, um die Lichtfeldbetrachtungsparameter zu bestimmen.

7. Verfahren nach einem der Ansprüche 1 bis 6, wobei der von den 4D-Lichtfelddaten abgeleitete Inhalt 4D-Lichtfelddaten sind.

8. Verfahren nach Anspruch 7, wobei der von den 4D-Lichtfelddaten abgeleitete Inhalt durch eine Menge von Focus Stacks mit dynamischen Stufen repräsentiert wird, wobei die dynamischen Stufen gemäß dem mindestens einen Parameter definiert sind.

9. Verfahren nach einem der Ansprüche 1 bis 6, wobei der von den 4D-Lichtfelddaten abgeleitete Inhalt ein 2D-Bild oder ein 2D-Video ist.

10. Verfahren nach einem der Ansprüche 1 bis 6, wobei der von den 4D-Lichtfelddaten abgeleitete Inhalt ein 3D-Inhalt ist.

11. Computerlesbares und nichttransientes Speichermedium, das ein Computerprogramm speichert, das eine Menge durch einen Computer ausführbarer Anweisungen zum Implementieren eines Verfahrens zum Anzeigen, wenn die Anweisungen durch einen Computer ausgeführt werden, umfasst, wobei die Anweisungen Anweisungen umfassen, die, wenn sie ausgeführt werden, den Computer dafür konfigurieren, das Verfahren nach einem der Ansprüche 1 bis 10 auszuführen.

12. Elektronische Vorrichtung zum Anzeigen eines Inhalts von 4D-Lichtfelddaten, wobei die elektronische Vorrichtung ein Modul umfasst, das konfiguriert ist zum:
- Erhalten mindestens eines Parameters, der einem Benutzer zugeordnet ist, wobei der mindestens eine Parameter ein Merkmal oder eine Kategorie oder ein Attribut, das bzw. die sich auf den Benutzer bezieht, repräsentiert;
- Erhalten (101) der 4D-Lichtfelddaten oder eines identifizierenden Elements der 4D-Lichtfelddaten;
- Senden einer Anforderung an eine andere elektronische Vorrichtung, wobei die Anforderung den mindestens einen Parameter und entweder die 4D-Lichtfelddaten oder das identifizierende Element umfasst;
- Erhalten (102) von Lichtfeldbetrachtungsparametern für die 4D-Lichtfelddaten; und
- Ableiten (103) des anzuzeigenden Inhalts von den 4D-Lichtfelddaten unter Verwendung der Lichtfeldbetrachtungsparameter;
wobei die Lichtfeldbetrachtungsparameter unter Verwendung einer Statistik abgeleitet werden, die gemessene Interaktionen mit den 4D-Lichtfelddaten durch andere Benutzer repräsentiert.

13. Elektronische Vorrichtung nach Anspruch 12, wobei die Lichtfeldbetrachtungsparameter Blickpunktparameter und/oder Refokussierungsparameter und/oder Blickfeldparameter und/oder Parameter visueller Effekte und/oder Feldtiefeparameter umfassen.

14. Elektronische Vorrichtung zum Anzeigen nach Anspruch 12 oder 13, wobei sich die gemessenen Interaktionen auf die Änderung des Blickpunkts und/oder auf die Refokussierung und/oder auf die Änderung des Blickfelds und/oder auf die Anwendung eines visuellen Effekts und/oder auf die Änderung der Feldtiefe beziehen.

## Revendications

1. Procédé d'affichage d'un contenu dérivé de données de champ lumineux 4D, le procédé étant exécuté par un dispositif électronique, le procédé comprenant :
- l'obtention d'au moins un paramètre associé à un utilisateur, ledit au moins un paramètre représentant une caractéristique ou une catégorie ou un attribut associé audit utilisateur ;
- l'obtention (101) desdites données de champ lumineux 4D ou d'un élément d'identification desdites données de champ lumineux 4D ;
- la transmission d'une demande à un autre dispositif électronique, où ladite demande comprend ledit au moins un paramètre et soit lesdites données de champ lumineux 4D, soit ledit élément d'identification ;
- l'obtention (102) de paramètres de visualisation de champ lumineux pour lesdites données de champ lumineux 4D ; et
- la dérivation (103) dudit contenu à afficher desdites données de champ lumineux 4D à l'aide desdits paramètres de visualisation de champ lumineux ;
dans lequel lesdits paramètres de visualisation de champ lumineux sont dérivés à l'aide de statistiques représentatives d'interactions mesurées avec lesdites données de champ lumineux 4D par d'autres utilisateurs.

2. Procédé selon la revendication 1, dans lequel lesdits paramètres de visualisation de champ lumineux comprennent des paramètres de point de vue et/ou des paramètres de refocalisation et/ou des paramètres de champ de vision et/ou des paramètres d'effet visuel et/ou des paramètres de profondeur de champ.

3. Procédé selon la revendication 1 ou 2, dans lequel lesdites interactions mesurées se rapportent au changement de point de vue et/ou à la refocalisation et/ou au changement de champ de vision et/ou à l'application d'un effet visuel et/ou au changement de profondeur de champ.

4. Procédé selon la revendication 2 ou 3, dans lequel ledit effet visuel se rapporte à la variation de couleur en arrière-plan et/ou en avant-plan dudit contenu, et/ou se rapporte au depth keying, et/ou se rapporte à la pixellisation, et/ou se rapporte aux effets miniatures et/ou se rapporte au décalage d'inclinaison.

5. Procédé selon l'une quelconque des revendications 1 à 4, dans lequel ledit au moins un paramètre associé à un utilisateur appartient à une liste comprenant les éléments suivants :
- âge d'un utilisateur ;
- informations de nationalité ;
- lieu de résidence ;
- lieu de naissance ;
- loisirs ;
- sexe ;
- catégorie professionnelle ;
- formation ;
- préférence pour une intention artistique donnée dans la gestion du flou ;
- niveau de flou préféré ;
- préférence pour les arrière-plans flous ;
- préférence pour les avant-plans flous ;
- préférence pour la mise au point globale ;
- préférence pour les gros plans ;
- préférence pour un champ de vision large.

6. Procédé selon l'une quelconque des revendications 1 à 5, dans lequel lorsque plusieurs paramètres associés audit utilisateur sont utilisés pour obtenir (102) lesdits paramètres de visualisation de champ lumineux, chaque paramètre est associé à une pondération afin de déterminer lesdits paramètres de visualisation de champ lumineux.

7. Procédé selon l'une quelconque des revendications 1 à 6, dans lequel ledit contenu dérivé desdites données de champ lumineux 4D correspond à des données de champ lumineux 4D.

8. Procédé selon la revendication 7, dans lequel ledit contenu dérivé desdites données de champ lumineux 4D est représenté par un ensemble de piles focales avec des étapes dynamiques, lesdites étapes dynamiques étant définies selon ledit au moins un paramètre.

9. Procédé selon l'une quelconque des revendications 1 à 6, dans lequel ledit contenu dérivé desdites données de champ lumineux 4D est une image 2D ou une vidéo 2D.

10. Procédé selon l'une quelconque des revendications 1 à 6, dans lequel ledit contenu dérivé desdites données de champ lumineux 4D est un contenu 3D.

11. Support de stockage non transitoire lisible sur ordinateur sur lequel est stocké un programme informatique comprenant un ensemble d'instructions exécutables par un ordinateur pour mettre en œuvre un procédé d'affichage lorsque les instructions sont exécutées par un ordinateur, dans lequel les instructions comprennent des instructions qui, lorsqu'elles sont exécutées, configurent l'ordinateur pour mettre en œuvre le procédé selon l'une quelconque des revendications 1 à 10.

12. Dispositif électronique pour afficher un contenu à partir de données de champ lumineux 4D, le dispositif électronique comprenant un module configuré pour :
- obtenir au moins un paramètre associé à un utilisateur, ledit au moins un paramètre représentant une caractéristique ou une catégorie ou un attribut associé audit utilisateur ;
- obtenir (101) lesdites données de champ lumineux 4D ou un élément d'identification desdites données de champ lumineux 4D ;
- transmettre une demande à un autre dispositif électronique, où ladite demande comprend ledit au moins un paramètre et soit lesdites données de champ lumineux 4D, soit ledit élément d'identification ;
obtenir (102) des paramètres de visualisation de champ lumineux pour lesdites données de champ lumineux 4D ; et
- dériver (103) ledit contenu à afficher desdites données de champ lumineux 4D à l'aide desdits paramètres de visualisation de champ lumineux ;
dans lequel lesdits paramètres de visualisation de champ lumineux sont dérivés à l'aide de statistiques représentatives d'interactions mesurées avec lesdites données de champ lumineux 4D par d'autres utilisateurs.

13. Dispositif électronique selon la revendication 12, dans lequel lesdits paramètres de visualisation de champ lumineux comprennent des paramètres de point de vue et/ou des paramètres de refocalisation et/ou des paramètres de champ de vision et/ou des paramètres d'effet visuel et/ou des paramètres de profondeur de champ.

14. Dispositif électronique selon la revendication 12 ou 13, dans lequel lesdites interactions mesurées se rapportent au changement de point de vue et/ou à la refocalisation et/ou au changement de champ de vision et/ou à l'application d'un effet visuel et/ou au changement de profondeur de champ.
